# EUROPEAN PATENT APPLICATION

(11) **EP 4 661 212 A1**
(43) Date of publication of application: **10.12.2025**
(21) Application number: 25177021.0
(22) Date of filing: 16.05.2025
(51) Int. Cl.: H01Q 3/46, H01Q 5/45, H01Q 9/04, H01Q 15/00, H01Q 21/00, H01Q 21/06

(54) **DUAL BAND REFLECT ARRAY AND DUAL BAND UNIT CELL FOR USE IN A REFLECT ARRAY**

(30) Priority: 04.06.2024 US 202463655918 P
(71) Applicant: MacDonald, Dettwiler and Associates Corporation, Ste-Anne-de-Bellevue, QC H9X 3R2 (CA)
(72) Inventor: Glâtre, Karim, Sainte-Anne-de-Bellevue, H9X 3R2 (CA); Camacho Prieto, Pablo Emilio, Sainte-Anne-de-Bellevue, H9X 3R2 (CA)
(74) Representative: Grünecker Patent- und Rechtsanwälte PartG mbB

(57) **Abstract**

A unit cell for use in a reflect array is provided. The unit cell receives or transmits RF signals in first and second non-overlapping frequency bands. The unit cell includes a first element configured to address both the first and second frequency bands, a second element configured to address the second frequency band and compensate for phase errors induced by the first element, and a frequency selective surface ("FSS") layer disposed between the first element and the second element that is configured to reflect the first frequency band and allow passthrough of the second frequency band. The first element, second element, and FSS layer are arranged in a stack with the first element at the top and the second element at the bottom. A reflect array including multiple unit cells and methods of constructing and operating the reflect array and unit cell are also provided.

## Description

### Technical Field

The following relates generally to reflect array antennas, and more particularly to dual band reflect array antennas that use patch elements.

### Introduction

Reflect arrays are a well-known technology for flat reflectors that allow for emulating the profile of a parabolic reflector using patch elements. Application of reflect array technology for space communication has been quite limited in the past due to their narrow bandwidth. Typically, reflect array antennas have a narrow bandwidth with typically only a fraction of bandwidth being achievable by the reflect array antenna.

Accordingly, there is a need for an reflect array antenna that overcomes at least some of the disadvantages of existing systems and methods.

### Summary

A unit cell for use in a reflect array is provided. The unit cell is configured to receive or transmit RF signals in first and second non-overlapping frequency bands. The unit cell includes a first element configured to address both the first and second frequency bands, a second element configured to address the second frequency band and compensate for phase errors induced by the first element, and a frequency selective surface ("FSS") layer disposed between the first element and the second element and configured to reflect the first frequency band and allow passthrough of the second frequency band. The first element, second element, and FSS layer are arranged in a stack with the first element at the top and the second element at the bottom.

The first frequency band may be V band and the second frequency band may be Q band.

The first frequency band may be for transmit and the second frequency band for receive or the second frequency band may be for transmit and the first frequency band for receive.

A plurality of the unit cells may be mounted as a reflect array on a reflector shell.

The reflect array and reflector shell may form a reflector. The reflector may be a sectioned reflector including an internal section and a plurality of external sections arranged around the perimeter of the internal section.

In an embodiment, the internal section is hexagonal with six sides of equal length and the number of external sections is six. The plurality of external sections are arranged such that each external section includes a first side that forms a common edge with one side of the internal section, a second side that forms a common edge with a first adjacent external section, and a third side that forms a common edge with a second adjacent external section.

In an embodiment, the external sections are equally sized trapezoids, and an outer perimeter of the reflector is hexagonal with six equal length sides.

A method of constructing a reflect array for receiving or transmitting RF signals in first and second non-overlapping frequency bands is provided. The method includes: (i) providing a first RF band element comprising a first radiating element patch, the first RF band element configured to address both first and second RF bands; (ii) providing a second RF band element comprising a second radiating element patch, the second RF band element configured to address the second RF band and correct effects that the first RF band has on the second RF band; (iii) disposing a layer of frequency selective material between the first and second RF band elements, the layer of frequency selective material configured to reject or reflect signals in the first RF band and allow passthrough of or transmit signals in the second RF band; (iv) repeating (i)-(iii) to form a plurality of dual band unit cells; and (v) mounting the plurality of dual band unit cells in a single plane as an array on a reflector shell.

In an embodiment, the first frequency band is V band and the second frequency band is Q band.

In an embodiment, the first frequency band is for transmit and the second frequency band is for receive or the second frequency band is for transmit and the first frequency band is for receive.

In an embodiment, the plurality of dual band unit cells mounted on the reflector shell form a reflector, and the reflector is a sectioned reflector including an internal section and a plurality of external sections arranged around the perimeter of the internal section.

In an embodiment, the internal section is hexagonal with six sides of equal length and the number of external sections is six, and the plurality of external sections are arranged such that each external section includes a first side that forms a common edge with one side of the internal section, a second side that forms a common edge with a first adjacent external section, and a third side that forms a common edge with a second adjacent external section.

In an embodiment, the external sections are equally sized trapezoids, and an outer perimeter of the reflector is hexagonal with six equal length sides.

A method of operating a dual band reflect array antenna for receiving or transmitting RF signals in first and second non-overlapping frequency bands is also provided. The method includes receiving or transmitting RF signals at the dual band reflect array, the RF signals including a first RF band signal and a second RF band signal, the dual band reflect array including a plurality of unit cells, each unit cell including a first RF band element, a second RF band element, and a frequency selective surface (FSS) layer disposed between the first and second elements. The method further includes receiving or transmitting the first RF band signal using the first RF band element of the plurality of dual band patch elements. The method further includes receiving or transmitting the second RF band signal using the second RF band unit cell of the plurality of dual band patch elements, including addressing the second RF signal and correcting for an effect of the first RF signal on the second RF signal. The method further includes filtering the RF signals with a layer of frequency selective material disposed between the first and second RF band unit cells of each dual band patch element to allow passthrough of the second RF signal and reject or prevent passthrough of the first RF signal.

In an embodiment, the first frequency band is V band and the second frequency band is Q band.

In an embodiment, the first frequency band is for transmit and the second frequency band is for receive or the second frequency band is for transmit and the first frequency band is for receive.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a dual band patch element for use in a reflect array antenna, according to an embodiment;
Figure 2 is a perspective view schematic diagram of a dual band patch element for use in a reflect array antenna, according to an embodiment;
Figure 3 is an exploded view schematic diagram of the dual band patch element of Figure 2;
Figure 4 is a top view of a QV band reflect array including a plurality of dual band patch elements showing reflect array geometry for a QV band application, according to an embodiment;
Figure 5 is a graph of antenna directivity in Q-band for a QV band reflect array including a plurality of dual band patch elements, according to an embodiment;
Figure 6 is a graph of antenna directivity in Q-band for a QV band reflect array including a plurality of dual band patch elements, according to an embodiment;
Figure 7 is a flowchart of a method of constructing a dual band reflect array, according to an embodiment;
Figure 8 is a flowchart of a method of operating a dual band reflect array, according to an embodiment; and
Figure 9 is a graph of antenna directivity versus theta plane for a dual band QV antenna without the dual band reflect array of the present disclosure (i.e., using a more traditional approach), where poor beam formation is demonstrated compared to what may be achieved using the dual band reflect array of the present disclosure.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to reflect arrays, and more particularly to a dual band patch element for use in a reflect array and dual band reflect array.

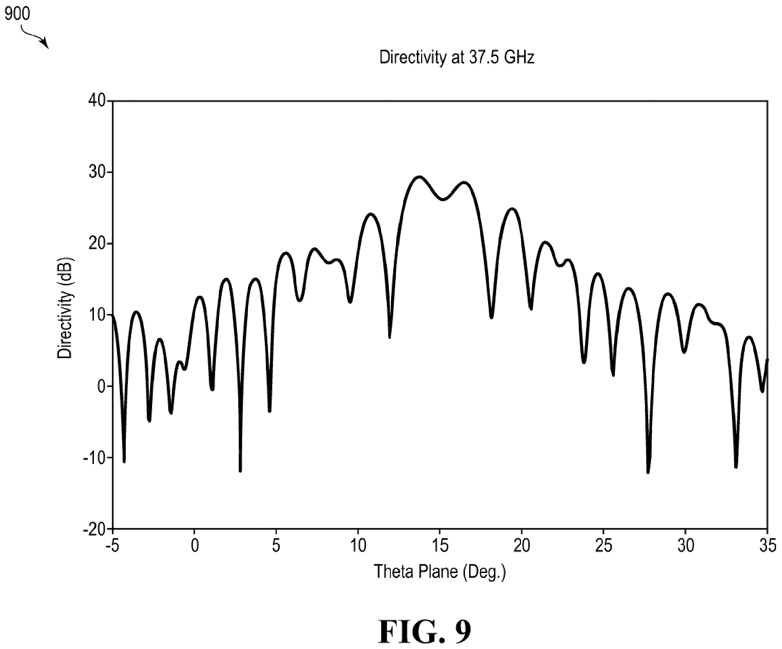

The present disclosure provides a dual band reflect array and unit cell (or dual band patch element) for use in a reflect array. Generally, a unit cell is a geometry that is reproduced along a reflect array with different parameters to address the required phase slopes to achieve parabolic like performance. In the present disclosure, a unit cell may include a top patch element, an FSS, and a bottom patch element. The unit cell enables good performance for dual band operation. Good performance may be measured in terms of gain, but also in terms of having a real beam. For example, other approaches may produce very poor patterns and fail to form a beam (e.g., Figure 9), while the present disclosure provides for acceptable gain and beam properties in dual band operations.

The present disclosure combines the use of a frequency selective surface with reflect array concepts, which has not been done before. Existing approaches have focused on trying to combine two bands on a single element that leads to large phase errors in one band due to the nature of the cells. The frequency selective surface layer of the unit cell of the present disclosure allows for a decoupling of elements that operate in just one band and allows for compensation of phase errors from the first layer. The control over the two bands in the unit cell of the present disclosure is therefore much better than such existing approaches. The structure of the unit cell also enables an independent optimization for each band (for instance, having the first band aiming at a different angle than the second band).

The dual band reflect array of the present disclosure provides an improvement over existing reflect array technology for a wider bandwidth. Work to this point directed to increasing the bandwidth of such elements has been directed to an approach that is distinctly different from the present disclosure (single element handling a wide bandwidth).

Reflect array is an interesting technology for satellite communication ("Satcom") as it can speed up lead time for reflectors and enable potential use of deployable flat panel reflectors and PCB based antennas. Being able to support two bands at the same time with this concept enables a wider use for Satcom.

The technology described herein may be used to reproduce a parabolic reflector, but with a flat surface and patch elements (e.g., through introducing a phase difference to generate a phase front).

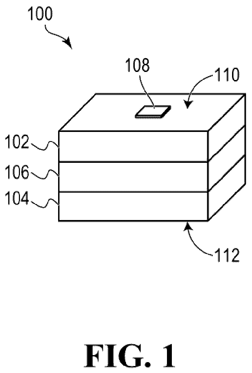

Referring now to Figure 1, shown therein is a dual band patch element 100 for use in a reflect array antenna, according to an embodiment. The dual band patch element 100 is also referred to as unit cell 100.

A plurality of dual band patch elements 100 may be assembled to form an array of radiating elements on a reflector. Such a reflect array may be referred to herein as a dual band reflect array. The dual band reflect array includes two non-overlapping RF bands operating at the same time on the same array. The dual band reflect array may be a receive or transmit antenna. The dual band reflect array may be particularly suitable for space communication. The dual band reflect array may be implemented as part of a reflect array antenna onboard a satellite.

In a particular embodiment, an array of dual band elements may be implemented in a complete single offset antenna operating in first and second, nonoverlapping RF Bands (e.g., V and Q bands).

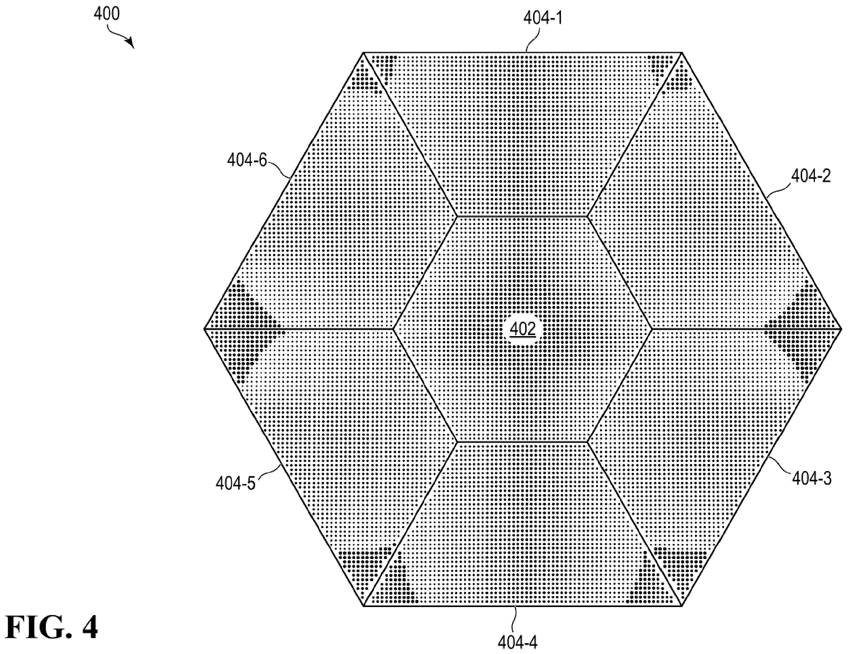

In an embodiment, the dual band reflect array may be a reflector where the reflector RF surface is divided into multiple pieces (also referred to as sections or segments). The reflector may include an internal section and a plurality of external sections (or "petals") arranged around the perimeter of the internal section (e.g., each external section forms a common edge with one edge or side of the internal section). In an example, the reflector is hexagonal and includes an internal hexagonal section and six external sections arranged around the internal hexagonal section (an example of such a "petalled reflector" is shown in Figure 4).

The dual band patch element 100, and reflect arrays formed from a plurality of dual band patch elements 100, may be particularly well suited to application in reflector antennas with flat panels, deployable antennas, and sub-reflectors. The present disclosure contemplates and covers embodiments in which dual band patch elements and dual band reflect arrays are used in such applications.

The dual band patch element 100 includes a first radio frequency ("RF") band element 102, a second RF band element 104, and a frequency selective surface ("FFS") layer 106 (or frequency selective spatial filter 106).

The patch element 100 also includes first RF patch 108, which is a component of first RF band element 102.

The patch element 100 also includes a second RF patch, which is a component of second RF band element 104 (not visible in Figure 1).

While the first RF patch 108 is depicted as a rectangle in Figure 1, the shape of the first and second RF patches are not particularly limited, and any suitable shape or geometry may be used. For example, and without limitation, the first and second RF patches may be rectangular, circular, or hexagonal. The first and second RF patches may also be referred to as radiating elements.

The first RF band element 102, second RF band element 104, and FFS layer 106 are arranged in a layered configuration in which the FFS layer 106 is disposed between the first RF band element 102 and the second RF band element 104. The patch element 100 as a whole, and the elements 102, 104 individually, may be considered a PCB stack up configuration.

Accordingly, the first RF band element 102 may be referred to as a first or top layer of the patch element 100 and the second RF band element 104 may be referred to as a second or bottom layer of the patch element 100.

Further, when multiple dual band radiating elements 100 are arranged in a reflect array, the plurality of first RF band elements 102 may be considered to form a first layer of the reflect array layer and the plurality of second RF band elements 104 may be considered to form a second layer of the reflect array, with the first and second layers separated by an FSS layer (comprising the FSS layers 106 of the plurality of patch elements 100 in the array).

The dual band patch element 100 includes a top surface 110 and a bottom surface 112. The patch element 100 is mounted or disposed on a reflector shell using bottom surface 112. Top surface 110 may also be considered and referred to as a radiating surface of the dual band patch element 100.

The first RF band of the first RF band element 102 and the second RF band of the second RF band element 104 are non-overlapping RF bands. In a particular example, the first and second RF bands are V-band and Q-band, respectively. The frequencies of the first and second RF bands are not particularly limited and any combination of nonoverlapping RF bands may be used. In general, a bigger separation between first and second RF bands may be easier for the FSS layer 106 to filter and to keep separate and may thus be preferable.

Generally, the FSS layer 106 is configured to reflect the first RF band and allow passthrough of the second RF band.

This may include recompensating the phase that has been changed by the v band unit cell to have the right phase dispersion in the end.

The stacked structure of patch element 100 with the FSS layer 106 in between the first and second RF band elements 102, 104 gives a degree of freedom to control each band separately.

The FSS layer 106 may have any suitable structure, shape, or geometry. In some examples, the FSS layer 106 may be a disc or a ring.

The FSS layer 106 may isolate the bottom layer (element 104) from the top layer (element 102). The bottom layer 104 is dedicated to the second RF band only and allows for correction or compensation for phase errors induced the first layer. The top element 102 will affect the phase of first RF band and second RF band. The FSS prevents the first RF band from reaching the bottom patch 104 by filtering the first RF band. The signal of the second RF band passes through the FSS 106 and reaches the bottom patch 104. The bottom patch is dedicated to the second RF band and is used to form the phase profile at the second RF band and at the same time correct for the phase error induced by the top element 102 (which affects the first RF band and the second RF band).

The first RF band element 102 is dedicated to the first RF band but affects both first and second RF bands. The phase of reflection is dedicated by the size of the patch element, which will vary along the reflect array. The top patch 102 is affecting both bands as the signal of the first RF band and the second RF band reflects on it. The first RF band element 102 is "dedicated to" the first RF band in that it is sized for best performance of the first RF band.

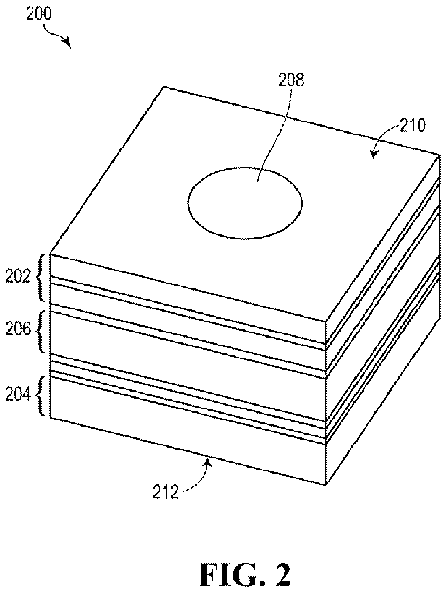

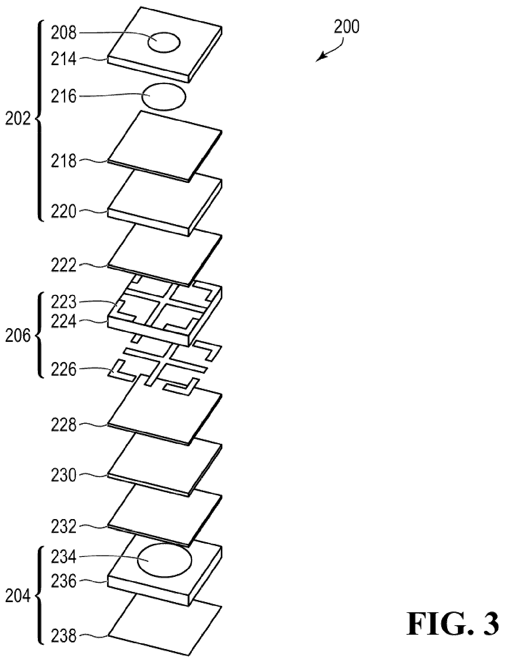

Referring now to Figures 2 and 3, shown therein is a dual band patch element 200, according to an embodiment. Patch element 200 may also be referred to as unit cell 200. Patch element 200 is an example of patch element 100 that is operative in QV bands. Similar components have been given similar reference numbers, incremented by 100 (i.e., 1xx, 2xx).

Patch element 200 includes V-band element 202 (or V-band radiating element 202), Q-band element 204 (or Q-band radiating element 204), and FSS layer 206 disposed between the elements 202, 204.

Patch element 200 includes a plurality of substrate layers 214, 220, 224, 230, 236. The substrate layers are composed of a dielectric material suitable for use in a printed circuit board (PCB stack up). In some embodiments, the substrate material may be Kevlar or Kapton with etched copper. The substrate layers 214, 220, 224, 230, 236 are arranged in a stacked configuration (or stack up configuration).

Patch element 200 includes a plurality of bonding layers 218, 222, 228, 232. The bonding layers 218, 222, 228, 232 are used to bond the substrate layers 214, 220, 224, 230, 236. As such, bonding layers 218, 222, 228 are each disposed between two substrate layers.

Patch element 200 further includes copper patches 208, 216, and 234. Copper patches 208, 216, and 234 are depicted as circular. In other embodiments, copper patches 208, 216, and 234 may have any other suitable shape. Copper patch 208 is disposed on a top surface of substrate layer 214 of v-band element 202. Copper patch 216 is disposed between bonding layer 218 and bottom surface of substrate layer 214. Copper patch 216 is disposed on a top surface of substrate layer 236 of Q-band element 204. The copper patches are designed or configured (e.g., sized) based on frequency. The copper patches may get larger or become smaller depending on the position of the dual band patch element 200 within the reflect array. In Figure 3, it can be seen that the copper patches 208, 216, 234 get larger moving from top to bottom (i.e., 208 is smaller than 216, 216 is smaller than 234). This change in size may be specifically designed for the particular position dual band patch element 200 is to occupy in the reflect array and thus, generally speaking, the size of the copper patches may vary depending on where the patch element 200 is positioned in the reflect array.

Patch element 200 further includes copper FSS elements 223 and 226. Copper element 223 is disposed on a top surface of substrate layer 224 of FSS layer 206. Copper element 226 is disposed between a bottom surface of substrate layer 224 and bonding layer 228. The geometry of copper elements 224, 226 is one example and the geometry may vary in other embodiments and is not particularly limited.

Patch element 200 further includes a copper layer 238. Copper layer 238 is coupled to the bottom surface of the bottom-most substrate layer 236.

Referring now to Figure 4, shown therein is a dual band reflector array 400 including a plurality of dual band patch elements, such as patch element 100 of Figure 1, according to an embodiment. Figure 4 is a final reflect array composed of an embodiment of the unit cell of the present disclosure.

Dual band reflector array 400 is a petalled reflector including an internal or central hexagonal section 202 and six external "petal" sections 404-1, 404-2, 404-3, 404-4, 404-5, 404-6 arranged around the perimeter of the internal hexagonal section 402. The way in which the external petal sections are shaped and arranged around the internal hexagonal section 402 makes the overall shape of the reflector hexagonal. Each petal section 404 shares one edge with the internal hexagonal section 402 and two other edges with adjacent petals.

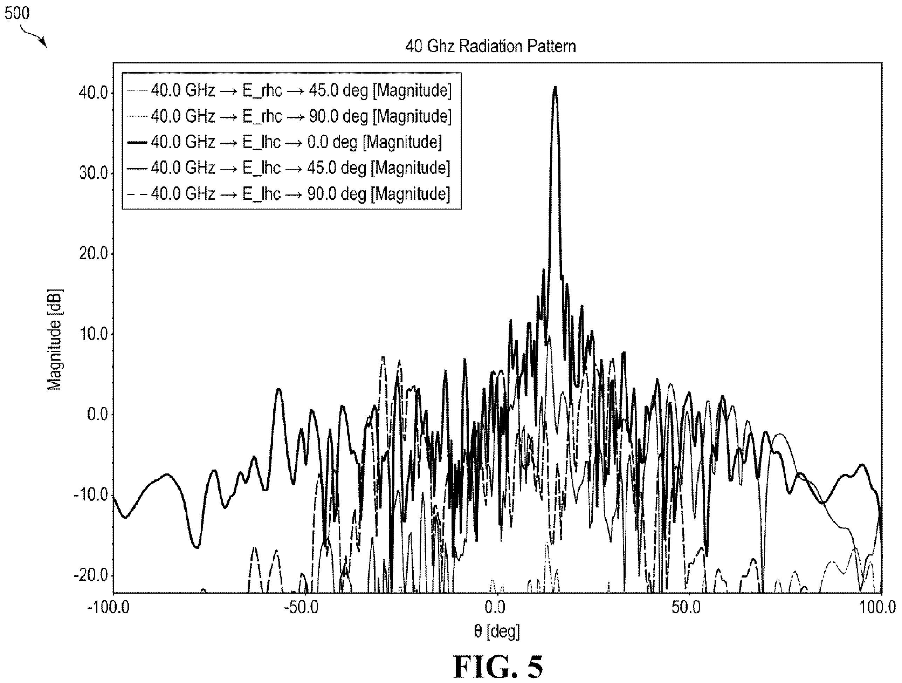

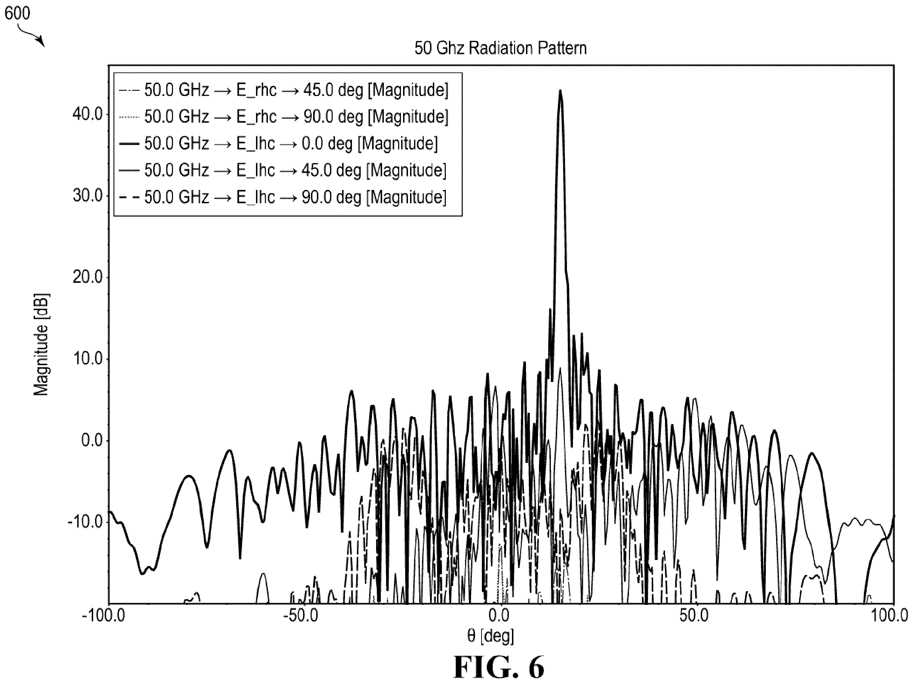

Referring now to Figures 5 and 6, shown therein are graphs 500, 600 illustrating antenna directivities in Q-band and V-band, respectively, for a QV band reflect array including a plurality of dual band patch elements, according to an embodiment.

Graphs 500 and 600 illustrate the radiation pattern of a reflect array composed of unit cells of the present disclosure configured for Q and V bands. Good gain performance can be seen for both frequency bands. In contrast, Figure 9 is a graph of antenna directivity versus theta plane for a QV antenna without the dual band reflect array of the present disclosure (i.e., using a more traditional configuration/approach), where the graph shows poor beam formation compared to what may be achieved using the dual band reflect array of the present disclosure.

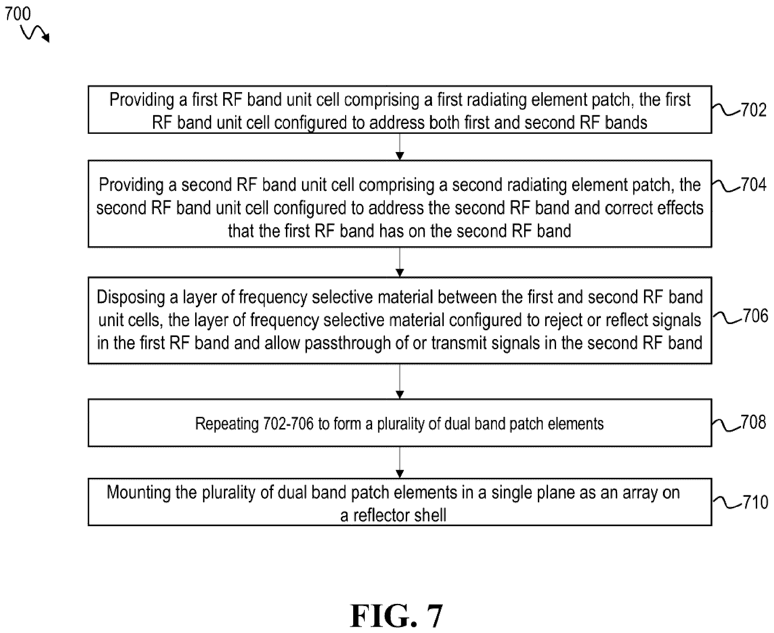

Referring now to Figure 7, shown therein is a method 700 of constructing a reflect array for receiving or transmitting RF signals in first and second non-overlapping frequency bands, according to an embodiment.

The method 700 includes, at 702, providing a first RF band element including a first radiating element patch, the first RF band element configured to address both the first and second RF bands.

The method 700 includes, at 704, providing a second RF band element comprising a second radiating element patch, the second RF band element configured to address the second RF band and correct effects that the first RF band has on the second RF band.

The method 700 includes, at 706, disposing a layer of frequency selective material between the first and second RF band elements, the layer of frequency selective material configured to reject or reflect signals in the first RF band and allow passthrough of or transmit signals in the second RF band.

Steps 702-706 form a dual band patch element.

The method 700 includes, at 708, repeating 702-706 to form a plurality of dual band patch elements.

The method includes, at 710, mounting the plurality of dual band patch elements in a single plane as an array on a reflector shell.

A reflector comprising the dual band patch elements mounted on the reflector shell may be sectioned reflector.

The sectioned reflector may include an internal section and a plurality of external sections arranged around the perimeter of the internal section.

In an embodiment, the internal section is hexagonal with six sides of equal length and the number of external sections is six. The plurality of external sections are arranged such that each external section includes a first side that forms a common edge with one side of the internal section, a second side that forms a common edge with a first adjacent external section, and a third side that forms a common edge with a second adjacent external section.

In an embodiment, the external sections are equally sized trapezoids, and an outer perimeter of the reflector is hexagonal with six equal length sides.

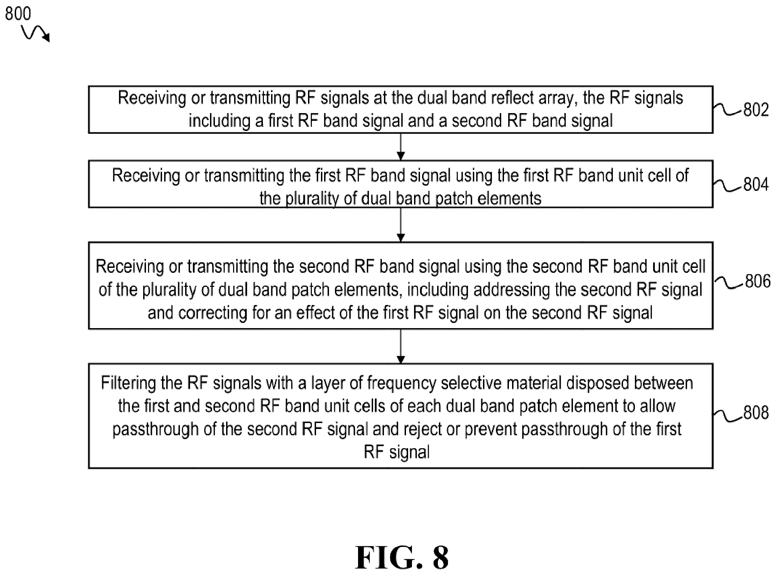

Referring now to Figure 8, shown therein is a method 800 of operating a dual band reflect array, according to an embodiment. The dual band reflect array can operate in first and second non-overlapping RF bands simultaneously. The dual band reflect array includes a plurality of dual band patch elements, such as patch element 100 of Figure 1.

At 802, the method 800 includes receiving or transmitting RF signals at the dual band reflect array, the RF signals including a first RF band signal and a second RF band signal.

At 804, the method 800 includes receiving or transmitting the first RF band signal using the first RF band element of the plurality of dual band patch elements.

At 806, the method 800 includes receiving or transmitting the second RF band signal using the second RF band element of the plurality of dual band patch elements, including addressing the second RF signal and correcting for an effect of the first RF signal on the second RF signal.

At 808, the method 800 includes filtering the RF signals with a layer of frequency selective material disposed between the first and second RF band elements of each dual band patch element to allow passthrough of the second RF signal and reject or prevent passthrough of the first RF signal.

While the above description provides examples of one or more apparatus, methods, or systems, it will be appreciated that other apparatus, methods, or systems may be within the scope of the claims as interpreted by one of skill in the art.

## Claims

1. A unit cell for use in a reflect array, the unit cell for receiving or transmitting RF signals in first and second non-overlapping frequency bands, the unit cell comprising:
a first element configured to address both the first and second frequency bands;
a second element configured to address the second frequency band and compensate for phase errors induced by the first element; and
a frequency selective surface ("FSS") layer disposed between the first element and the second element and configured to reflect the first frequency band and allow passthrough of the second frequency band;
wherein the first element, second element, and FSS layer are arranged in a stack with the first element at the top and the second element at the bottom.

2. The unit cell of claim 1, wherein the first frequency band is V band and the second frequency band is Q band.

3. The unit cell of claim 1, wherein the first frequency band is for transmit and the second frequency band is for receive or the second frequency band is for transmit and the first frequency band is for receive.

4. A reflect array comprising a plurality of unit cells of claim 1 mounted on a reflector shell in an array.

5. The reflect array of claim 4, wherein the reflect array and the reflector shell form a reflector, and wherein the reflector is a sectioned reflector including an internal section and a plurality of external sections arranged around the perimeter of the internal section.

6. The reflect array of claim 5, wherein the internal section is hexagonal with six sides of equal length and the number of external sections is six, wherein the plurality of external sections are arranged such that each external section includes a first side that forms a common edge with one side of the internal section, a second side that forms a common edge with a first adjacent external section, and a third side that forms a common edge with a second adjacent external section.

7. The reflect array of claim 6, wherein the external sections are equally sized trapezoids, and wherein an outer perimeter of the reflector is hexagonal with six equal length sides.

8. A method of constructing a reflect array for receiving or transmitting RF signals in first and second non-overlapping frequency bands, the method comprising:
(i) providing a first RF band element comprising a first radiating element patch, the first RF band element configured to address both first and second RF bands;
(ii) providing a second RF band element comprising a second radiating element patch, the second RF band element configured to address the second RF band and correct effects that the first RF band has on the second RF band;
(iii) disposing a layer of frequency selective material between the first and second RF band elements, the layer of frequency selective material configured to reject or reflect signals in the first RF band and allow passthrough of or transmit signals in the second RF band;
(iv) repeating (i)-(iii) to form a plurality of dual band unit cells; and
(v) mounting the plurality of dual band unit cells in a single plane as an array on a reflector shell.

9. The method of claim 8, wherein the first frequency band is V band and the second frequency band is Q band.

10. The method of claim 8, wherein the first frequency band is for transmit and the second frequency band is for receive or the second frequency band is for transmit and the first frequency band is for receive.

11. The method of claim 8, wherein the plurality of dual band unit cells mounted on the reflector shell form a reflector, and wherein the reflector is a sectioned reflector including an internal section and a plurality of external sections arranged around the perimeter of the internal section.

12. The method of claim 11, wherein the internal section is hexagonal with six sides of equal length and the number of external sections is six, wherein the plurality of external sections are arranged such that each external section includes a first side that forms a common edge with one side of the internal section, a second side that forms a common edge with a first adjacent external section, and a third side that forms a common edge with a second adjacent external section.

13. The method of claim 12, wherein the external sections are equally sized trapezoids, and wherein an outer perimeter of the reflector is hexagonal with six equal length sides.

14. A method of operating a dual band reflect array antenna for receiving or transmitting RF signals in first and second non-overlapping frequency bands, the method comprising:
receiving or transmitting RF signals at the dual band reflect array, the RF signals including a first RF band signal and a second RF band signal, the dual band reflect array including a plurality of unit cells, each unit cell including a first RF band element, a second RF band element, and a frequency selective surface (FSS) layer disposed between the first and second elements;
receiving or transmitting the first RF band signal using the first RF band element of the plurality of dual band patch elements;
receiving or transmitting the second RF band signal using the second RF band unit cell of the plurality of dual band patch elements, including addressing the second RF signal and correcting for an effect of the first RF signal on the second RF signal; and
filtering the RF signals with a layer of frequency selective material disposed between the first and second RF band unit cells of each dual band patch element to allow passthrough of the second RF signal and reject or prevent passthrough of the first RF signal.

15. The method of claim 14, wherein:
the first frequency band is V band and the second frequency band is Q band; or
the first frequency band is for transmit and the second frequency band is for receive; or
the second frequency band is for transmit and the first frequency band is for receive.
